# EUROPÄISCHE PATENTANMELDUNG

(11) **EP 0 666 450 A1**
(43) Veröffentlichungstag der Anmeldung: **09.08.1995**
(21) Anmeldenummer: 95810060.4
(22) Anmeldetag: 31.01.1995
(51) Int. Cl.: F17C 1/06, F17C 1/16, B29C 53/60, F16J 12/00

(54) **Druckbehälter**

(30) Priorität: 31.01.1994 CH 275/94
(71) Anmelder: Urenco Deutschland GmbH, D-52409 Jülich (DE)
(72) Erfinder: Lybaek, Bo, CH-5452 Oberrohrdorf (CH)
(74) Vertreter: Gottlob, Peter

(57) **Zusammenfassung**

Ein Druckbehälter (1) umfasst einen aus einem Kunststoff bestehenden Liner (3) mit einem zylindrischen Mittelteil (3b) und zwei kalottenförmigen Endteilen (3a,c), und einen den Liner (3) umhüllenden Aussenmantel (4) mit einer Mehrzahl in radialer Richtung übereinander angeordneter Tangentialwicklungen (11a-c) und Axialwicklungen (12a-c) aus einem faserverstärkten Kunststoff, wobei die unterste Wicklung als Tangentialwicklung (11a) ausgebildet ist und sich in axialer Richtung im wesentlichen über den zylindrischen Mittelteil (3b) des Liners (3) erstreckt. Ein solche Druckbehälter wird bei gleichzeitig leicht Herstellbarkeit in seiner Druckfestigkeit dadurch verbessert, dass die unterste Wicklung im Mittelbereich eine erste Dicke (D1) aufweist und an beiden Enden in einen Wicklungsrand (10a,b) übergeht, welcher eine zweite Dicke (D2) aufweist, die grösser ist als die erste Dicke (D1).

## Beschreibung

### TECHNISCHES GEBIET

Die vorliegende Erfindung bezieht sich auf das Gebiet der Druckbehälter. Sie betrifft einen Druckbehälter, umfassend einen aus einem Kunststoff bestehenden Liner mit einem zylindrischen Mittelteil und zwei kalottenförmigen Endteilen, und einen den Liner umhüllenden Aussenmantel mit einer Mehrzahl in radialer Richtung übereinander angeordneter Tangentialwicklungen und Axialwicklungen aus einem faserverstärkten Kunststoff, wobei die unterste Wicklung als Tangentialwicklung ausgebildet ist und sich in axialer Richtung im wesentlichen über den zylindrischen Mittelteil des Liners erstreckt.

Ein solcher Druckbehälter ist z.B. aus der Europäischen Patentanmeldung EP-A1-0 333 013 bekannt.

### STAND DER TECHNIK

Es ist seit langem bekannt, Druckbehälter für die Aufbewahrung von unter Druck stehenden Gasen oder Flüssigkeiten zu bauen, die vollständig aus Kunststoff bestehen. Derartige Druckbehälter weisen im Inneren als eigentlichen Aufbewahrungsbehälter einen (auf übliche Weise unter Einbeziehung von rotierenden Prozessen geblasenen) flaschenartigen sogenannten Liner aus einer Polymer auf. Der Liner ist aussen herum zur Erzielung der notwendigen Druckfestigkeit mit einem Aussenmantel umgeben, der aus einem faserverstärkten Kunststoff gewickelt ist. Der Aussenmantel ist dabei vorzugsweise aus mehrerem Wickellagen aufgebaut, die in ihrer Faserrichtung abwechselnd axial, d.h. weitgehend in Richtung der Behälterachse, und radial, d.h. weitgehend quer zur Behälterachse, orientiert sind.

Der Liner besteht seiner Form nach meist aus einem zylindrischen Mittelteil und zwei kalottenförmigen Endteilen. Zumindest in einem der Endteile läuft der Liner in Achsnähe in einem rohrförmigen Anschlussstutzen aus, der zum Befüllen bzw. Entleeren des Behälters verwendet wird. Während die Tangentialwicklung in ihrer axialen Ausdehnung im wesentlichen auf den Mittelteil des Liners beschränkt ist, erstreckt sich die Axialwicklung auch über die Endteile. Die dabei verwendete Wickeltechnik ist beispielsweise in der Deutschen Patentschrift DE-C1-34 26 158 oder in der Schwedischen Auslegeschrift SE-B-452 184 beschrieben.

Während der innenliegende Liner lediglich für die Dichtigkeit des Behälters verantwortlich ist, müssen die bei den erreichbaren Betriebsdrücken von über 300 bar auftretenden Zugkräfte von den Wickellagen des Aussenmantels aufgefangen werden. Schwachpunkte bilden dabei vor allem die Uebergänge zwischen den zylindrischen Mittelteil und den kalottenförmigen Endteilen des Behälters. Um an diesen Stellen eine höhere Festigkeit zu erreichen, ist in der eingangs genannten Druckschrift vorgeschlagen worden, bei gleichbleibender Dicke der untersten Tangentialwicklung den Durchmesser des Liners bzw. Behälters in den Randbereichen des Mittelteils linear nach aussen hin zu verkleinern, so dass der Behälter in diesen Bereichen konisch zuläuft. Hierdurch sollen insbesondere lokale Maxima der Zugspannung in der Axialwicklung reduziert werden.

Diese Art der Lösung ist jedoch aus zwei Gründen problematisch: Zum Einen muss die Tangentialwicklung in ihren Randbereichen auf einer Schräge gewickelt werden, was besondere Vorkehrungen beim Wickeln notwendig macht. Zum Anderen wird durch Aenderung der Geometrie zwar die Spannungsverteilung im Aussenmantel verändert, die Zugfestigkeit in den Wickellagen selbst jedoch nicht.

### DARSTELLUNG DER ERFINDUNG

Es ist daher Aufgabe der Erfindung, einen Druckbehälter zu schaffen, der eine Erhöhung der Druckfestigkeit ermöglicht, ohne die genannten Nachteile aufzuweisen.

Die Aufgabe wird bei einem Druckbehälter der eingangs genannten Art dadurch gelöst, dass die unterste Wicklung im Mittelbereich eine erste Dicke aufweist und an beiden Enden in einen Wicklungsrand übergeht, welcher eine zweite Dicke aufweist, die grösser ist als die erste Dicke.

Der Kern der Erfindung liegt darin, dass zur Verbesserung der Druckfestigkeit die Dicke der untersten Tangentialwicklung in den Randbereichen erhöht wird. Hierdurch kann der Uebergang zwischen Mittel- und Endteil verstärkt werden, ohne dass von der zugrundeliegenden Zylinderform abgewichen werden muss.

Eine erste bevorzugte Ausführungsform der Erfindung zeichnet sich dadurch aus, dass die Differenz der Dicken zwischen 0,4 und 2,6 mm beträgt, und dass sich die Wicklungsränder jeweils über eine Breite von mindestens 10 mm erstrecken, jedoch nicht breiter sind, als dem Zweifachen des Aussenradius des Liners entspricht. Durch die Wahl der Parameter in den angegebenen Bereichen lässt sich eine maximale Erhöhung der Festigkeit bei minimaler Veränderung des Schichtaufbaus erreichen.

Von Vorteil ist es weiterhin, wenn gemäss einer zweiten bevorzugten Ausführungsform der Liner im Bereich der Wicklungsränder einen reduzierten Aussenradius aufweist, wobei die Reduktion im Aussenradius des Liners im wesentlichen gleich der Differenz der Dicken der untersten Wicklung ist. Auf diese Weise ergibt sich ein gleichbleibender Aussenradius für die unterste Tangentialwicklung, so dass die darüberliegenden Axialwicklungen im Mittelteil weitgehend parallel zur Behälterachse verlaufen können.

Eine weitere bevorzugte Ausführungsform des Behälters nach der Erfindung zeichnet sich dadurch aus, dass der Druckbehälter über dem Aussenmantel mit einer Schutzschicht versehen ist, welche sich mindestens über den zylindrischen Mittelteil erstreckt, dass die Schutzschicht aus demselben Material besteht wie die Wicklungen des Aussenmantels, dass die Schutzschicht eine Dicke von 0,25 bis 1,25 mm aufweist, und dass die Schutzschicht kreuzweise gewickelt ist, wobei der Wickelwinkel relativ zur Behälterachse etwa zwischen 35° und 80° liegt. Durch die Schutzschicht ergibt sich eine weitere Verstärkung des Behälters, die dem Aussenmantel angepasst ist und mechanische Verletzungen des Aussenmantels im geschützten Bereich wirksam verhindert.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im Längsschnitt den Aufbau eines Druckbehälters gemäss einem ersten Ausführungsbeispiel der Erfindung;
- Fig. 2: im vergrösserten Ausschnitt den rechten Uebergang vom Mittelteil zum Endteil beim Behälter gemäss Fig. 1; und
- Fig. 3: eine zu Fig. 2 vergleichbare Darstellung eines weiteren Ausführungsbeispiels, bei dem der Aussenradius des Liners im Randbereich des Mittelteils durch Verformung reduziert ist.

### WEGE ZUR AUSFÜHRUNG DER ERFINDUNG

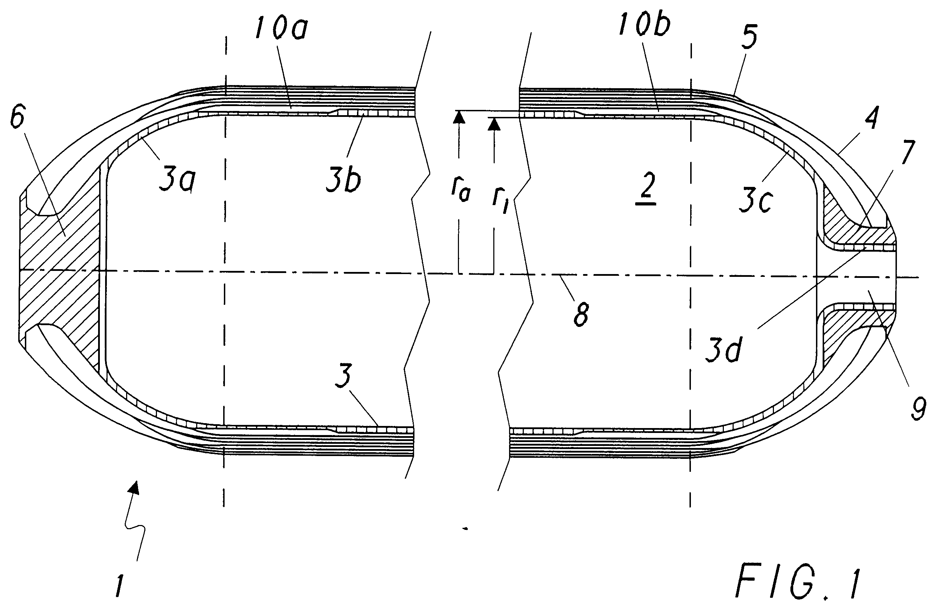

in Fig. 1 ist im Längsschnitt der Aufbau eines Druckbehälters gemäss einem ersten Ausführungsbeispiel der Erfindung dargestellt. Der Druckbehälter 1 umfasst im wesentlichen als Behälter einen Liner 3, der aus einem koaxial zur Behälterachse 8 angeordneten zylindrischen Mittelteil 3b, zwei kalottenförmigen Endteilen 3a und 3c, und einem rohrförmigen Anschlussstutzen 3d im rechten Endteil 3c besteht. Der Liner 3 ist beispielsweise aus einem Polymer-Kunststoff durch Blasen hergestellt. Im Mittelteil 3b weist er einen Innenradius rᵢ und einen Aussenradius rₐ auf.

Der Liner 3 übernimmt die eigentliche Behälterfunktion, ohne für grössere Drücke ausgelegt zu sein. Um eine ausreichende Druckfestigkeit zu gewährleisten, ist der Liner 3 aussen von einem Aussenmantel 4 umgeben, der sich aus einer Mehrzahl von Wicklungen aus einem faserverstärkten Kunststoff zusammensetzt. Dabei wechseln sich in dem Ausführungsbeispiel Tangentialwicklungen 11a,b,c und Axialwicklungen 12a,b,c miteinander ab, wobei die Tangentialwicklungen 11a-c im wesentlichen quer zur Behälterachse 8 und die Axialwicklungen 12a-c im wesentlichen parallel zur Behälterachse 8 gewickelt sind. Die Tangentialwicklungen 11a-c beschränken sich in ihrer axialen Ausdehnung auf den Mittelteil 3b des Liners 3, während die Axialwicklungen 12a-c auch die Endteile 3a und 3c umschliessen. Die unterste, direkt auf der Aussenfläche des Liners 3 aufgebrachte Wicklung ist dabei eine Tangentialwicklung 11a.

Im linken Endteil 3a liegt der Liner 3 mit einem flachen Boden an der Innenseite einer Bodenscheibe 6 an, die aussen von den Axialwicklungen 12a-c teilweise überdeckt ist. Im rechten Endteil 3c liegt der Liner 3 mit seinem Anschlussstutzen an der Innenwand eines Polstückes 7 an, welches nach aussen hin rohrförmig gestaltet ist und sich nach innen hin flanschartig erweitert. Auch das Polstück ist aussen von den Axialwicklungen 12a-c teilweise überdeckt. Im Inneren des Polstückes 7 und des anliegenden Anschlussstutzens 3d verbleibt eine Oeffnung 9, durch welche der Innenraum 2 des Druckbehälters 1 gefüllt bzw. entleert werden kann.

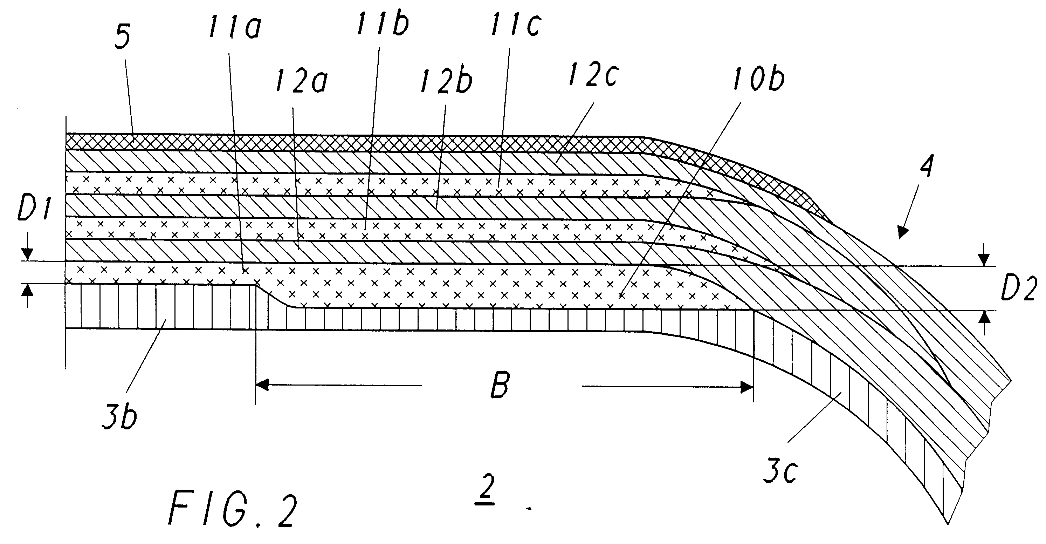

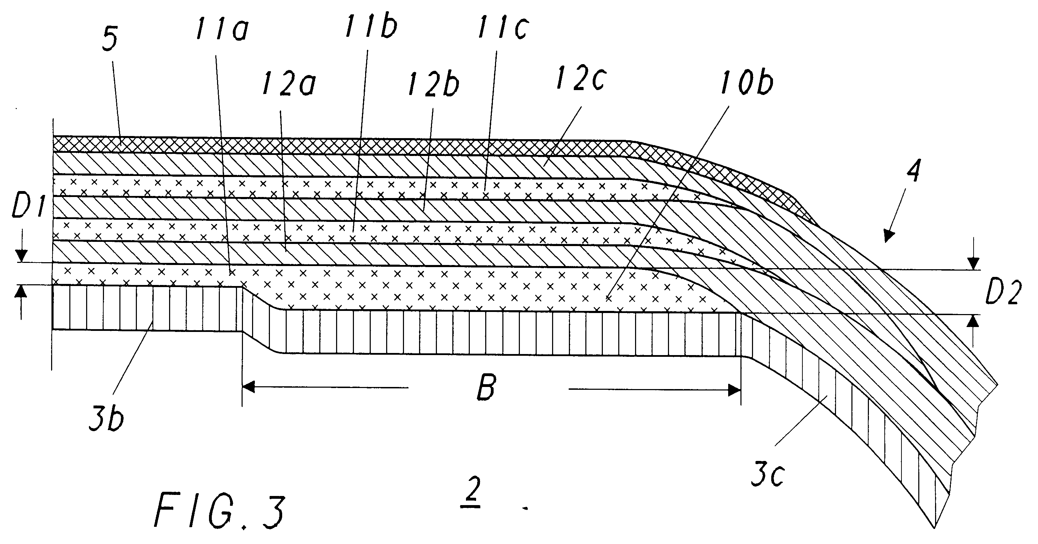

Während die Tangentialwicklungen 11b und 11c sowie die Axialwicklungen 12a-c über dem Mittelteil in ihrer Dicke praktisch konstant sind, geht die unterste Tangentialwicklung 11a, die im Mittelbereich eine erste Dicke D1 aufweist (Fig. 2 bzw. 3), an den beiden Enden jeweils in einen Wicklungsrand 10a bzw. 10b über, der eine zweite Dicke D2 aufweist, die grösser ist als die erste Dicke D1. Wie in der vergrösserten und in der y-Richtung zusätzlich gestreckten Darstellung der Fig. 2 deutlich erkennbar ist, vergrössert sich die Dicke der untersten Tangentialwicklung 11a zum Rande hin, wobei der Uebergang von einer Dicke zur anderen vorzugsweise in einem relativ schmalen Längenabschnitt erfolgt und die Dicke auf beiden Seiten des Uebergangs jeweils weitgehend konstant ist. Der Aussenradius der Wicklung bleibt dabei konstant, während der Innenradius entsprechend abnimmt. Um diese Ausbildung der Wicklung zu ermöglichen, weist der Liner 3 im Bereich der Wicklungsränder 10a,b einen reduzierten Aussenradius rₐ auf.

Die Reduktion im Aussenradius rₐ des Liners 3 ist dabei im wesentlichen gleich der Differenz der beiden Dicken D1 und D2 der untersten Tangentialwicklung 10a, so dass der Zuwachs in der Dicke der Wicklung 11a von der auf dem Liner 3 gebildeten Nut vollständig aufgenommen wird.

Damit eine Verdickung der Wicklung 11a unter diesen Voraussetzungen überhaupt möglich ist, muss die Differenz der beiden Dicken D1, D2 mindestens so gross sein wie die Dicke einer Wickellage der untersten Tangentialwicklung 11a. Bevorzugt liegt die Dickendifferenz in dem Bereich zwischen 0,4 und 2,6 mm. Die Wicklungsränder 10a,b erstrecken sich jeweils in axialer Richtung über eine Breite B von mindestens 10 mm; sie sollen jedoch nicht breiter sein, als dem Aussenradius rₐ des Liners 3 entspricht.

Bei dem in Fig. 1 und 2 dargestellten Ausführungsbeispiel bleibt der Innenradius rᵢ des Liners 3 im zylindrischen Mittelteil 3b, d.h., auch an den Wicklungsrändern 10a,b, konstant. Die Reduktion im Aussenradius rₐ kann in diesem Beispiel dadurch erreicht werden, dass der Liner 3 zunächst mit konstanter Wandstärke geblasen und anschliessend in Bereich der Wicklungsränder 10a,b abgedreht wird. Bei dem in Fig. 3 gezeigten Ausführungsbeispiel ist der Innenradius rᵢ des Liners 3 im Bereich der Wicklungsränder 10a,b dagegen um denselben Betrag reduziert wie der Aussenradius rₐ. Dies lässt sich z.B. dadurch erreichen, dass der Liner 3 direkt in eine Form mit entsprechender Stufe im Innendurchmesser geblasen wird. Eine Nachbearbeitung ist in diesem Fall nicht nötig.

In einer bevorzugten Weiterbildung der Erfindung ist der Druckbehälter 1 über dem Aussenmantel 4 mit einer Schutzschicht 5 versehen, welche sich mindestens über den zylindrischen Mittelteil 3b erstreckt. Diese Schutzschicht 5 verstärkt den Aussenmantel 4 mechanisch und verhindert im abgedeckten Bereich zugleich, dass der Aussenmantel von aussen verletzt und damit seine Druckfestigkeit beeinträchtigt wird. Die Schutzschicht 5 besteht vorzugsweise aus demselben Material wie die Wicklungen 11a-c und 12a-c des Aussenmantels 4. Sie kann dadurch mit derselben Wickeltechnik aufgebracht werden und ist dem Aussenmantel optimal angepasst. Die Schutzschicht 5 weist insbesondere eine Dicke von 0,25 bis 1,25 mm auf. Darüber hinaus ist die Schutzschicht 5 vorteilhaft kreuzweise gewickelt, wobei der Wickelwinkel relativ zur Behälterachse 8 etwa zwischen 35° und 80° liegt.

insgesamt ergibt sich mit der Erfindung ein vollständig aus Kunststoff bestehender Druckbehälter, der hochfest, leicht herzustellen und weitgehend unempfindlich gegen äussere Einflüsse ist.

### BEZEICHNUNGSLISTE

- 1: Druckbehälter
- 2: Innenraum
- 3: Liner
- 3a,c: Endteil (Liner)
- 3b: Mittelteil (Liner)
- 3d: Anschlussstutzen
- 4: Aussenmantel
- 5: Schutzschicht
- 6: Bodenscheibe
- 7: Polstück
- 8: Behälterachse
- 9: Oeffnung
- 10a,b: Wicklungsrand
- 11a-c: Tangentialwicklung
- 12a-c: Axialwicklung
- B: Breite (Wicklungsrand)
- D1: Dicke (1. Tangentialwicklung)
- D2: Dicke (Wicklungsrand der 1. Tangentialwicklung)
- rₐ: Aussenradius (Liner)
- rᵢ: Innenradius (Liner)

## Patentansprüche

1. Druckbehälter (1), umfassend einen aus einem Kunststoff bestehenden Liner (3) mit einem zylindrischen Mittelteil (3b) und zwei kalottenförmigen Endteilen (3a,c), und einen den Liner (3) umhüllenden Aussenmantel (4) mit einer Mehrzahl in radialer Richtung übereinander angeordneter Tangentialwicklungen (11a-c) und Axialwicklungen (12a-c) aus einem faserverstärkten Kunststoff, wobei die unterste Wicklung als Tangentialwicklung (11a) ausgebildet ist und sich in axialer Richtung im wesentlichen über den zylindrischen Mittelteil (3b) des Liners (3) erstreckt, dadurch gekennzeichnet, dass die unterste Wicklung im Mittelbereich eine erste Dicke (D1) aufweist und an beiden Enden in einen Wicklungsrand (10a,b) übergeht, welcher eine zweite Dicke (D2) aufweist, die grösser ist als die erste Dicke (D1).

2. Druckbehälter nach Anspruch 1, dadurch gekennzeichnet, dass die Differenz der beiden Dicken (D1, D2) mindestens so gross ist wie die Dicke einer Wickellage der untersten Wicklung (11a).

3. Druckbehälter nach Anspruch 2, dadurch gekennzeichnet, dass die Differenz der Dicken (D1, D2) zwischen 0,4 und 2,6 mm beträgt.

4. Druckbehälter nach einem der Ansprüche 1 bis 3, dadurch gekennzeichnet, dass sich die Wicklungsränder (10a,b) jeweils über eine Breite (B) von mindestens 10 mm erstrecken, jedoch nicht breiter sind, als dem Zweifachen des Aussenradius (rₐ) des Liners (3) entspricht.

5. Druckbehälter nach einem der Ansprüche 1 bis 4, dadurch gekennzeichnet, dass im Bereich der Wicklungsränder (10a,b) der Liner (3) einen reduzierten Aussenradius (rₐ) aufweist.

6. Druckbehälter nach Anspruch 5, dadurch gekennzeichnet, dass die Reduktion im Aussenradius (rₐ) des Liners (3) im wesentlichen gleich der Differenz der Dicken (D1, D2) der untersten Wicklung (10a) ist.

7. Druckbehälter nach einem der Ansprüche 5 und 6, dadurch gekennzeichnet, dass der Innenradius (rᵢ) des Liners (3) im zylindrischen Mittelteil (3b) konstant ist.

8. Druckbehälter nach eine der Ansprüche 5 und 6, dadurch gekennzeichnet, dass der Innenradius (rᵢ) des Liners (3) im Bereich der Wicklungsränder (10a,b) um denselben Betrag reduziert ist wie der Aussenradius (rₐ).

9. Druckbehälter nach einem der Ansprüche 1 bis 8, dadurch gekennzeichnet, dass der Druckbehälter (1) über dem Aussenmantel (4) mit einer Schutzschicht (5) versehen ist, welche sich mindestens über den zylindrischen Mittelteil (3b) erstreckt.

10. Druckbehälter nach Anspruch 9, dadurch gekennzeichnet, dass die Schutzschicht (5) aus demselben Material besteht wie die Wicklungen (11a-c; 12a-c) des Aussenmantels (4), dass die Schutzschicht (5) eine Dicke von 0,25 bis 1,25 mm aufweist, und dass die Schutzschicht (5) kreuzweise gewickelt ist, wobei der Wickelwinkel relativ zur Behälterachse (8) etwa zwischen 35° und 80° liegt.
